(19) Europäisches Patentamt / European Patent Office / Office européen des brevets

(11) **EP 4 524 661 B1**

(12) **EUROPÄISCHE PATENTSCHRIFT**

(45) Veröffentlichungstag und Bekanntmachung des Hinweises auf die Patenterteilung:
**04.02.2026   Patentblatt 2026/06**

(21) Anmeldenummer: **23197616.8**

(22) Anmeldetag: **15.09.2023**

(51) Internationale Patentklassifikation (IPC):
**G05B 19/042** *(2006.01)*

(52) Gemeinsame Patentklassifikation (CPC):
**G05B 19/0428**

(54) **VERFAHREN ZUM ÜBERWACHEN EINER KOMMUNIKATIONSVERBINDUNG**

METHOD FOR MONITORING A COMMUNICATION CONNECTION

PROCÉDÉ DE SURVEILLANCE D'UNE LIAISON DE COMMUNICATION

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(43) Veröffentlichungstag der Anmeldung:
**19.03.2025   Patentblatt 2025/12**

(73) Patentinhaber: **Siemens Aktiengesellschaft 80333 München (DE)**

(72) Erfinder:
• **Walter, Markus 96050 Bamberg (DE)**
• **Hog, Ronny 92245 Kümmersbruck (DE)**
• **Schweiger, Julia 92242 Hirschau (DE)**
• **Schötz, Sebastian 92256 Hahnbach (DE)**

(74) Vertreter: **Siemens Patent Attorneys Postfach 22 16 34 80506 München (DE)**

(56) Entgegenhaltungen:
**EP-A1- 1 484 655     DE-A1- 102017 119 578**

**Beschreibung**

Die Erfindung betrifft ein Verfahren zum Überwachen einer Kommunikationsverbindung zwischen einem ersten Teilnehmer und einem zweiten Teilnehmer, wobei im ersten Teilnehmer ein erstes Bearbeitungsprogramm mit einer ersten Zykluszeit zyklisch abgearbeitet wird, zur Überwachung der Kommunikationsverbindung wird im ersten Teilnehmer eine erste Diagnoseeinheit mit einem ersten Zeitzähler derart betrieben, dass ein Eintreffen eines ersten Telegramms von dem zweiten Teilnehmer den ersten Zeitzähler startet, wobei innerhalb einer vorgebbaren ersten Überwachungszeit mit Hilfe des ersten Zeitzählers ein Eintreffen eines zweiten Telegramms von dem zweiten Teilnehmer überwacht wird.

In der EP 1 484 655 A1 ist bereits ein derartiges Überwachungsverfahren offenbart, auf ein abgesendetes Telegramm wird der Empfang eines entsprechenden Quittierungssignals in einem weiteren Telegramm während einer Überwachungszeit überwacht.

Die DE 10 2017 119578 A1 zeigt Verfahren zur Übertragung von Daten zwischen einer zentralen Steuereinrichtung und einer Mehrzahl dezentraler Geräte, mit den Schritten: Erzeugen eines Datentelegramms zur Broadcast- oder Multicast-Übertragung von Daten zu einer Mehrzahl von Geräten in der zentralen Steuereinrichtung, unidirektionales Übertragen des Datentelegramms von der zentralen Steuereinrichtung zu wenigstens einem dezentralen Gerät, Überwachen der Übertragungsdauer der Übertragung des Datentelegramms von der zentralen Steuereinrichtung zu dem wenigstens einen dezentralen Gerät, und Auslösen einer vorbestimmten Sicherheitsreaktion, wenn die Übertragungsdauer einen vorgegebenen Wert überschreitet.

Für die Kommunikation zwischen der dort gezeigten F-CPU und einem Ausgangselement ist, die "Maximale Reaktionszeit im Fehlerfall" die "Maximale Reaktionszeit ohne Fehler"(in der Zeichnung WCDTGesamt) + Überwachungszeit(PROFIsafe-Timout-Zeit) + Zyklus des Ausgangselements - Zyklus der sendenden Einheit.

Es ist eine Aufgabe der vorliegenden Erfindung eine maximale Reaktionszeit im Fehlerfall zu reduzieren.

Die Aufgabe wird dadurch gelöst, dass in der ersten Diagnoseeinheit eine Restlaufzeit aus der Differenz der ersten Überwachungszeit und des ersten Zeitzählers gebildet wird und geprüft wird, ob die Restlaufzeit kleiner oder gleich der ersten Zykluszeit ist, und wenn das der Fall ist, wird ein Überwachungssignal generiert.

Bisher wird ein Eintreffen eines neuen Telegramms, bzw. einer neuen korrekten Sicherheits-PDU beim F-Gerätetreiber, innerhalb der Überwachungszeit, also die Watchdog-Zeit derart überwacht, dass wenn die Watchdog-Zeit abläuft eine Fehlerreaktion gestartet wird. Das Empfangen eines neuen Telegramms startet die Watchdog-Zeit erneut. Die Prüfung, ob die Watchdog-Zeit abgelaufen ist, wird vor der Prüfung auf ein neues Telegramm ausgeführt.

Erfindungsgemäß ist es nun so, dass bereits reagiert wird, wenn die Restlaufzeit des Zeitzählers für eine Überwachungszeit, insbesondere für eine gerätespezifische Überwachungszeit, kleiner ist als die Zykluszeit bzw. kleiner ist als die gerätespezifische Zykluszeit.

Das Verfahren wird mit Vorteil bei einer Kommunikationsverbindung zwischen dem ersten Teilnehmer und dem zweiten Teilnehmer in einem sicherheitsrelevanten System betrieben, und dabei wird das erste Bearbeitungsprogramm im ersten Teilnehmer bei Vorliegen des Überwachungssignals von empfangenen Prozesswerten auf Ersatzwerte umschaltet, wobei die Umschaltung bereits in dem Zyklus ausgeführt wird, in welchem die Prüfung ergeben hat, dass die Restlaufzeit kleiner oder gleich der ersten Zykluszeit ist.

Bei einem Sicherheitssystem muss die Reaktionszeit nicht nur für einen Worst-Case betrachtet werden, sondern auch für einen Worst-Case im Fehlerfall. Dazu wurde eine Safety Function Response Time (SFRT) definiert, diese umfasst die Buslaufzeit, Zykluszeit des Controllers, Zykluszeit der Peripherie und der Watchdog-Zeit.

In dem Teilnehmer oder der Komponente, in der die Überwachungszeit bzw. die WD-Time läuft, wird nicht erst reagiert, wenn die WD-Time abgelaufen ist, sondern es wird bereits reagiert wenn die Restlaufzeit der WD-Time kleiner als die Zykluszeit der Komponente ist. Denn selbst wenn bis zum nächsten Zyklus ein neues Telegramm empfangen worden wäre, muss sicher auf die abgelaufene WD-Time reagiert werden. Durch diese Lösung kann eine Zykluszeit der auswertenden Komponente, in der die WD-Time weiterläuft, eingespart werden. Mit Vorteil wird jetzt eine Zykluszeit eingespart und somit verkleinert sich die Reaktionszeit im Fehlerfall. Daraus resultierend kann eine Dimensionierung einer Anlage verkleinert werden z.B. können kleinere Sicherheitsabstände eingeführt werden, da z.B. eine Maschineschneller gestoppt werden kann.

Einen Zeitvorteil liefert das Verfahren ebenso bei der Anwendung bei einem Kommunikations-Betrieb von dem zweiten Teilnehmer als ein Eingabegerät über den ersten Teilnehmer als eine Automatisierungs-Steuerung zu einem dritten Teilnehmer als ein Ausgabegerät, wodurch eine maximale Reaktionszeit für einen Fehlerfall in der Kommunikation minimiert wird und sicher auf den Fehlerfall reagiert wird.

Auch kann das Verfahren in einem Standard für ein Kommunikationsprotokoll zur Übertragung sicherheitsrelevanter Daten in Automatisierungsanwendungen mit funktionaler Sicherheit genutzt werden.

Bisher wurde eine Worst Case Delay Time (WCDT) berechnet und die maximalen WD-Time plus die Zykluszeit der zugehörigen Komponente, in der die WD-Time läuft, addiert, wie es in der PROFIsafe Norm IEC 61784-3-3 gefordert ist. Mit der Erfindung kann das Verfahren derart in die PROFIsafe F-IO Treiber implementiert werden, dass die Auswertung automatisch durchgeführt wird und so die Reaktionszeit schneller ist.

Auch wird das Verfahren genutzt, um bei dem Betrieb einer gefahrbringenden Maschine einen Abstand eines Bedieners zu einer Auslösevorrichtung zu verringern.

Durch diese Lösung kann eine Zykluszeit der auswertenden Komponente (in der die WD-Time läuft) eingespart werden.

**Beispielrechnung:**

CPU-Zyklus = 100ms
Laufzeit Sicherheitsprogramm (FPROG) = 5ms
BUSZEIT = 5ms
F-DI (DAT = 10ms, WCDT = 13ms)
F-DO (DAT = 10ms, WCDT 16ms)
DAT = Device Acknowledgment Time
HAT = Host Acknowledgment Time

SFRT Safety Function Response Time

Buslaufzeit,
Zykluszeit des Controllers,
Zykluszeit der Peripherie
Watchdog-Zeit (WD-Time)
F-WD Time: Failsafe Watchdog Time (-> Zeit in der ein neues Telegramm empfangen werden muss)
WCDT: Worst Case Delay Time
(maximale Reaktionszeit ohne Fehler)
SFRT: Safety Function Response Time
(maximale Reaktionszeit im Fehlerfall)

MNR MonitoringNumbers (MNR)

MonitoringNumber means to ensure authenticity and the correct order of transmitted safety PDUs
DAT Device Acknowledgment Time
HAT Host Acknowledgment Time

**Betrachtung für eine F-Kommunikation zwischen einer F-DI und einer F-CPU bzw. SFRT für Sicherheitsfunktion bei F-DI → F-CPU → F-DO**

Formel für minimale PROFIsafe-Überwachungszeit (WD TIME)

$$\text{Formel für WD\_TIME} := DAT + 2\text{xBUS} + HAT_{(CPU\text{-}Zyklus)} + Reserve$$

Formel für max. Reaktionszeit bei Vorhandensein eines Fehlers (SFRT)

**Bisherige Formel**

$$SFRT_{ALT} := WCDT + Max(WD\_TIME_{FDI \leftrightarrow CPU} + Zyklus_{CPU} - Zyklus_{FDI};$$

$$WD\_TIME_{CPU\leftrightarrow F\text{-}DO} + Zyklus_{FDO} - Zyklus_{CPU})$$

Formel mit Prüfung ob aktueller Stand der noch nicht abgelaufenen WD_TIME < $HAT_{CPU\text{-}Zyklus}$

$$SFRT_{NEU} := WCDT + Max (WD\_TIME_{FDI\leftrightarrow CPU} - Zyklus_{FDI};$$

$$WD\_TIME_{CPU\leftrightarrow FDO} - Zyklus_{FDO})$$

Vergleich $SFRT_{ALT}$ mit $SFRT_{NEU}$ ergibt, dass die Reaktionszeit bei $SFRT_{NEU}$ um $HAT_{CPU\text{-}Zyklus}$ bzw. $Zyklus_{FDO}$ kleiner ist.

**<u>Beispielrechnung A:</u>**

CPU-Zyklus = 100ms, F-Programmlaufzeit (FPROG) = 5ms, ET200MP F-DI 16 (Zyklus = 5ms, DAT = 10ms, WCDT=13ms), ET200MP F-DQ 8 (Zyklus = 5ms, DAT = 10, WCDT 16ms) und BUS=5

$$WD\_TIME := 100_{CPU\text{-}Zyklus} + 2x5_{BUS} + 10_{DAT(FDI\ oder\ FDO)} + 10_{Reserve} = 130ms$$

$$WCDT := 13_{WCDT\text{-}FDI} + 5_{BUS} + \mathbf{100}_{CPU\text{-}Zyklus} + 5_{FPROG} + 5_{BUS} + 16_{WCDT\text{-}FDO} = 144ms$$

$$SFRT_{ALT} := 144_{WCDT} + Max(130_{WD\_TIME} + 100_{CPU\text{-}Zyklus} - 5_{Zyklus\text{-}FDI};$$

$$130_{WD\_TIME} + 5_{FDO\text{-}Zyklus} - 100_{CPU\text{-}Zyklus}) = 144ms + Max(225ms;\ 25ms) = \underline{\mathbf{369ms}}$$

$SFRT_{NEU} := 144\ _{WCDT} + Max(130_{WD\_TIME} - 5_{Zyklus\text{-}FDI};\ 130_{WD\_TIME} - 100_{CPU\text{-}Zyklus}) = 144ms + Max(125ms;\ 30ms) = $ **<u>269ms</u>** → Einsparung **100ms bzw. 27%**

Da im aktuellen Zyklus WD_Time bei 30ms steht (130-100) und der F-Zyklus 100ms ist, kann sofort reagiert werden.

**<u>Beispielrechnung B:</u>**

CPU-Zyklus = 30ms, F-Programmlaufzeit (FPROG) = 5ms, ET200MP F-DI 16 (Zyklus = 5ms, DAT = 10ms, WCDT=13ms), ET200MP F-DQ 8 (Zyklus = 5ms, DAT = 10, WCDT 16ms) und BUS=5ms

$$WD\_TIME := 30_{CPU\text{-}Zyklus} + 2x5_{BUS} + 10_{DAT(FDI\ oder\ FDO)} + 5_{Reserve} = 55ms$$

$$WCDT := 13_{WCDT\text{-}FDI} + 5_{BUS} + \mathbf{30}_{CPU\text{-}Zyklus} + 2_{FPROG} + 5_{BUS} + 16_{WCDT\text{-}FDO} = 71ms$$

$$SFRT_{ALT} := 71_{WCDT} + Max(55_{WD\_TIME} + 30_{CPU\text{-}Zyklus} - 5_{Zyklus\text{-}FDI};$$

$$55_{WD\_TIME} + 5_{Zyklus\text{-}FDO} - 30_{CPU\text{-}Zyklus}) = 71ms + Max(80ms;\ 30ms) = \underline{\mathbf{151ms}}$$

$$SFRT_{NEU} := 71_{WCDT} + Max(55_{WD\_TIME} - 5_{Zyklus\text{-}FDI};\ 55_{WD\_TIME} - 30_{CPU\text{-}Zyklus})$$

$$= 71ms + Max(50ms;\ 25ms) = \underline{\mathbf{121ms}} \rightarrow Einsparung\ \mathbf{30ms\ bzw.\ 20\%}$$

Da im aktuellen Zyklus WD_Time bei 25ms steht (55-30) und der F-Zyklus 30ms ist, kann sofort reagiert werden.

**<u>Beispielrechnung C:</u>**

CPU-Zyklus = 10ms, F-Programmlaufzeit (FPROG) = 5ms, ET200MP F-DI 16 (Zyklus = 5ms, DAT = 10ms, WCDT=13ms), ET200MP F-DQ 8 (Zyklus = 5ms, DAT = 10, WCDT 16ms) und BUS=5ms

$$\text{WD\_TIME} := 10_{\text{CPU-Zyklus}} + 2\text{x}5_{\text{BUS}} + 10_{\text{DAT(FDI oder FDO)}} + 5_{\text{Reserve}} = 35\text{ms}$$

$$\text{WCDT} := 13_{\text{WCDT-DI}} + 5_{\text{BUS}} + \mathbf{10}_{\text{CPU-Zyklus}} + \mathbf{2}_{\text{FPROG}} + 5_{\text{BUS}} + 16_{\text{WCDT-FDO}} = 51\text{ms}$$

$$\text{SFRT}_{\text{ALT}} := 51_{\text{WCDT}} + \text{Max}(35_{\text{WD\_TIME}} + 10_{\text{CPU-Zyklus}} - 5_{\text{Zyklus-FDI}};$$

$$35_{\text{WD\_TIME}} + 5_{\text{Zyklus-FDO}} - 10_{\text{CPU-Zyklus}}) = 51\text{ms} + \text{Max}(40\text{ms}; 30\text{ms}) = \underline{\mathbf{91ms}}$$

$$\text{SFRT}_{\text{NEU}} := 51_{\text{WCDT}} + \text{Max}(35_{\text{WD\_TIME}} - 5_{\text{Zyklus-FDI}}; 35_{\text{WD\_TIME}} - 10_{\text{CPU-Zyklus}})$$

$$= 51\text{ms} + \text{Max}(30\text{ms}; 25\text{ms}) = \underline{\mathbf{81ms}} \rightarrow \text{Einsparung } \mathbf{10\text{ms bzw. } 11\%}$$

Da im aktuellen Zyklus WD_Time bei 5ms steht (35-3x10) und der F-Zyklus 10ms ist, kann sofort reagiert werden.

**Beispielrechnung D:**

CPU-Zyklus = 10ms, F-Programmlaufzeit (FPROG) = 5ms, ET200MP F-DI 16 (Zyklus = 5ms, DAT = 10ms, WCDT=13ms), ET200SP F-DQ 4 (Zyklus = 16ms, DAT = 20, WCDT 32ms) und BUS=5ms

$$\text{WD\_TIME}_{\text{FDI}\leftarrow\rightarrow\text{CPU}} := 10_{\text{CPU-Zyklus}} + 2\text{x}5_{\text{BUS}} + 10_{\text{DAT(FDI)}} + 5_{\text{Reserve}} = 35\text{ms}$$

$$\text{WD\_TIME}_{\text{CPU}\leftarrow\rightarrow\text{FDO}} := 10_{\text{CPU-Zyklus}} + 2\text{x}5_{\text{BUS}} + 20_{\text{DAT(FDO)}} + 5_{\text{Reserve}} = 45\text{ms}$$

$$\text{WCDT} := 13_{\text{WCDT-DI}} + 5_{\text{BUS}} + \mathbf{10}_{\text{CPU-Zyklus}} + \mathbf{2}_{\text{FPROG}} + 5_{\text{BUS}} + 32_{\text{WCDT-FDO}} = 67\text{ms}$$

$$\text{SFRT}_{\text{ALT}} := 67_{\text{WCDT}} + \text{Max}(35_{\text{WD\_TIME(FDI/CPU)}} + 10_{\text{CPU-Zyklus}} - 5_{\text{Zyklus-FDI}};$$

$$45_{\text{WD\_TIME(CPU/FDO)}} + 16_{\text{Zyklus-FDO}} - 10_{\text{CPU-Zyklus}}) = 67\text{ms} + \text{Max}(40\text{ms}; 51\text{ms}) = \underline{\mathbf{118ms}}$$

$\text{SFRT}_{\text{NEU}} := 67_{\text{WCDT}} + \text{Max}(35_{\text{WD\_TIME(FDI/CPU)}} - 5_{\text{Zyklus-FDI}}; 45_{\text{WD\_TIME(CPU/FDO)}} - 10_{\text{CPU-Zyklus}}) = 67\text{ms} + \text{Max}(30\text{ms}; 35\text{ms}) = 102\text{ms} \rightarrow \text{Einsparung } 16\text{ms bzw. } 13{,}6\%$

Da im aktuellen Zyklus WD_Time bei 13ms steht (45-2x16) und der F-DO-Zyklus 16ms ist, kann sofort reagiert werden.

Anmerkung:

WCDT: Worst Case Delay Time bzw. max. Reaktionszeit im fehlerfreien Fall.

**Betrachtung für eine F-Kommunikation zwischen einer F-CPU und einer F-CPU bzw. SFRT für Sicherheits-funktion bei F-DI $\rightarrow$ F-CPU1 $\rightarrow$ F-CPU2 $\rightarrow$ F-DO**

Formel für minimale Überwachungszeit (WD TIME) für CPU-CPU-Kommunikation

$$\text{Formel für WD\_TIME}_{\text{CPU-CPU}} := \text{CPU1-Zyklus} + 2\text{xBUS} + \text{CPU2-Zyklus} + \text{Reserve}$$

Formel für max. Reaktionszeit bei Vorhandensein eines Fehlers (SFRT, bei Übertragung CPU zu CPU)

**Bisherige Formel**

$$\mathbf{SFRT_{ALT}} := WCDT + WD\_TIME_{\mathbf{CPU-CPU}} + CPU2\text{-}Zyklus_{(Empfänger)} - CPU1\text{-}Zyklus_{(Sender)}$$

**Formel mit Prüfung ob aktueller Stand der noch nicht abgelaufenen**

$$WD\_TIME < CPU2\text{-} Zyklus_{(Empfänger)}$$

$$\mathbf{SFRT_{NEU}} := WCDT + WD\_TIME_{\mathbf{CPU-CPU}} - CPU1\text{-}Zyklus$$

Vergleich $SFRT_{ALT}$ mit $SFRT_{NEU}$ ergibt, dass die Reaktionszeit bei $SFRT_{NEU}$ um CPU2-Zyklus kleiner ist.

**Beispielrechnung E:**

CPU1-Zyklus = 50ms, F-Programmlaufzeit1 (FPROG1) = 5ms, CPU2-Zyklus = 100ms, F-Programmlaufzeit2 (FPROG2) = 5ms, ET200MP F-DI 16 (Zyklus = 5ms, DAT = 10ms, WCDT=13ms), ET200MP F-DQ 8 (Zyklus = 5ms, DAT = 10, WCDT 16ms), $BUS1_{FDI-CPU1}$ = 5ms, $BUS2_{CPU1-CPU2}$ = 5ms und $BUS3_{CPU2-FDO}$ = 5ms

$$WD\_TIME2_{CPU1-CPU2} := 50_{CPU1\text{-}Zyklus} + 2x5_{BUS2} + 100_{CPU2\text{-}Zyklus} + 10_{Reserve} = 170ms$$

$$WCDT := 13_{WCDT\text{-}DI} + 5_{BUS1} + 50_{CPU1\text{-}Zyklus} + 5_{FPROG1} + 5_{BUS2} + 100_{CPU2\text{-}Zyklus} + 5_{FPROG2} + 16_{WCDT\text{-}DO} = 199ms$$

$$SFRT_{ALT(Timeout\text{-}CPU\text{-}CPU)} := 199_{WCDT} + 170_{WD\_TIME\text{-}CPU\text{-}CPU} + 100_{CPU2\text{-}Zyklus} - 50_{CPU1\text{-}Zyklus} = \underline{\mathbf{419ms}}$$

$SFRT_{NEU(Timeout\text{-}CPU\text{-}CPU)} := 199_{WCDT} + 170_{WD\_TIME\text{-}CPU\text{-}CPU} - 50_{CPU1\text{-}Zyklus} = \mathbf{319ms} \rightarrow$ Einsparung **100ms bzw. 21%** da $SFRT_{NEU(Timeout\text{-}FDI\text{-}CPUs)}$ größer

Da im aktuellen Zyklus WD_Time bei 70ms steht (170-100) und der F-Zyklus 100ms ist, kann sofort reagiert werden.

$$SFRT_{ALT(Timeout\text{-}FDI\text{-}CPU1)} := 199_{WCDT} + 80_{WD\_TIME(FDI/CPU1)} + 50_{CPU1\text{-}Zyklus} - 5_{Zyklus\text{-}FDI} = \underline{\mathbf{324ms}}$$

$SFRT_{NEU(Timeout\text{-}FDI\text{-}CPU1)} := 199_{WCDT} + 80_{WD\_TIME(FDI/CPU1)} - 5_{Zyklus\text{-}FDI} = \mathbf{274ms} \rightarrow$ kleiner als $SFRT_{NEU(Timeout\text{-}CPU\text{-}CPU)}$ deswegen $SFRT_{NEU(Timeout\text{-}CPU\text{-}CPU)}$ entscheidend)

$$SFRT_{ALT(Timeout\text{-}CPU2\text{-}FDO)} := 199_{WCDT} + 130_{WD\_TIME(CPU2/FDO)} + 5_{Zyklus\text{-}FDO} - 100_{CPU\text{-}Zyklus} = \underline{\mathbf{234ms}}$$

$SFRT_{NEU(Timeout\text{-}CPU2\text{-}FDO)} := 199_{WCDT} + 130_{WD\_TIME(CPU2/FDO)} - 100_{CPU\text{-}Zyklus} = \mathbf{229ms} \rightarrow$ kleiner als $SFRT_{NEU(Timeout\text{-}CPU\text{-}CPU)}$ deswegen $SFRT_{NEU(Timeout\text{-}CPU\text{-}CPU)}$ entscheidend)

**Anmerkung:**

WCDT: Worst Case Delay Time bzw. max. Reaktionszeit im fehlerfreien Fall**.**
Weitere Erläuterungen zu dem Begriff "Timeout", der Fachmann oder die Fachfrau versteht unter Timeout bei der Anwendung von PROFIsafe den Watchdog. Dieser Watchdog überprüft ob innerhalb der Watchdogzeit ein "neues" gültiges Profisafe Telegramm eingetroffen ist. Über Profinet werden die Telegramme zyklisch verschickt, z.B. alle 4ms. Das PROFIsafe Telegramm wird allerdings nur im Zyklus des F-Programms in der CPU aktualisiert.
Angenommen das F-Programm wird alle 30ms aufgerufen und die Buszykluszeit beträgt 4ms, dann wird im 4ms Takt ein Profisafe Telegramm verschickt, das allerdings nur alle 30ms geupdatet wird. Profinet verschickt so lange das alte Telegramm, bis es ein neues gibt. Der Profisafe Watchdog wird nur dann zurückgesetzt, wenn ein neues Telegramm eintrifft.

Die minimale Watchdogzeit würde hier also ~34ms betragen damit das System überhaupt funktionieren "kann", auch wenn eigentlich alle 4ms ein neues Telegramm eintrifft.

Wenn allerdings nur eine Nachricht verloren geht, würde sofort der Watchdog zuschlagen. Um hier eine bessere Verfügbarkeit zu erzielen, sollte die Watchdogzeit großzügiger kalkuliert werden (Programmlaufzeit des F-Programms, seine Aktualisierungszeit, Buszyklus, Zeit für verlorene Telegramme etc.). Statt 34ms also z.B. 100ms solange die Sicherheitsanforderungen dies tolerieren.

Ist es nicht möglich den Watchdog zu erhöhen, da das Sicherheitssystem so schnell reagieren muss, dann muss man die Zykluszeiten des Sicherheitsprogramms und die Buszykluszeit reduzieren, was evtl. schnellere Hardware voraussetzen kann.

Der Parameter "F_WD_Time" ist die Überwachungszeit im fehlersicheren DPNormslave/IO-Normdevice/PA-Feldgerät. Innerhalb der Überwachungszeit muss ein gültiges aktuelles Sicherheitstelegramm von dem Zielgerät ankommen. Damit wird sichergestellt, dass Ausfälle und Fehler erkannt werden und entsprechende Reaktionen ausgelöst werden, die das F-System im sicheren Zustand halten oder es in einen sicheren Zustand überführen. Die Überwachungszeit sollte einerseits so hoch sein, dass Telegrammverzögerungen durch die Kommunikation toleriert werden, aber im Fehlerfall (z. B. Unterbrechung der Kommunikationsverbindung) die Fehlerreaktionsfunktion schnell genug reagiert. Der Parameter "F_WD_Time" wird in Schritten von 1ms angegeben und der Wertebereich des Parameters wird durch die GSD-Datei begrenzt.

Auch wird die eingangsgenannte Aufgabe durch eine Automatisierungs-Steuerung gelöst, die Automatisierungs-Steuerung umfasst dazu eine Diagnoseeinheit zum Überwachen einer Kommunikationsverbindung mit einem Eingabegerät,
einen Prozessor ausgestaltet zum zyklischen Abarbeiten eines Bearbeitungsprogramms mit einer ersten Zykluszeit, die Diagnoseeinheit ist dabei ausgestaltet mit einem ersten Zeitzähler, welcher bei Eintreffen eines ersten Telegramms gestartet wird, weiterhin ausgestaltet innerhalb einer vorgebbaren ersten Überwachungszeit mit Hilfe des ersten Zeitzähler ein Eintreffen eines zweiten Telegramms von dem Eingabegerät zu überwachen, dabei ist die Diagnoseeinheit ausgestaltet eine Restlaufzeit aus der Differenz der ersten Überwachungszeit und des ersten Zeitzählers zu bilden und weiterhin ausgestaltet zu prüfen, ob die Restlaufzeit kleiner oder gleich der ersten Zykluszeit ist, und wenn das der Fall ist, wird ein Überwachungssignal generiert.

In einer Weiterbildung ist die Automatisierungs-Steuerung ausgestaltet als eine auf funktionale Sicherheit ausgelegte Steuerung, und ausgestaltet das, dass Bearbeitungsprogramm bei Vorliegen des Überwachungssignals von empfangenen Prozesswerten auf Ersatzwerte umschaltet, wobei die Umschaltung bereits in dem Zyklus ausgeführt wird, in welchem die Prüfung ergeben hat, dass die Restlaufzeit kleiner oder gleich der ersten Zykluszeit ist.

Im Sinne der Erfindung ist mit funktionaler Sicherheit die Definition gemäß der Normenreihe IEC 61508 "Funktionale Sicherheit sicherheitsbezogener elektrischer/elektronischer/programmierbar elektronischer Systeme" gemeint. Hier wird die Anwendung diverser Methoden zur Beherrschung von Fehlern beschrieben.

Zum Beispiel die Vermeidung systematischer Fehler in der Entwicklung, z. B. Spezifikations- und Implementierungsfehler; Überwachung im laufenden Betrieb zur Erkennung von zufälligen Fehlern; und eine Sichere Beherrschung von erkannten Fehlern und Übergang in einen vorher als sicher definierten Zustand.

Die Automatisierungs-Steuerung ist weiterhin, ausgestaltet mit einem Busanschluss zum Anschluss eines Eingabegerätes und eines Ausgabegerätes, wobei die Diagnoseeinheit und das erste Bearbeitungsprogramm ausgestaltet sind durch das Bereitstellen der Ersatzwerte eine maximale Reaktionszeit für einen Fehlerfall in der Kommunikation zu minimieren und sicher auf den Fehlerfall zu reagieren.

Vorteilhafterweise ist die Automatisierungs-Steuerung, ausgestaltet mit einem Kommunikationstreiber für ein standardisiertes Kommunikationsprotokoll zur Übertragung sicherheitsrelevanter Daten in Automatisierungsanwendungen mit funktionaler Sicherheit.

In der Komponente, in der die WD-Time läuft, wird nicht erst reagiert, wenn die WD-Time abgelaufen ist, sondern wenn die Restlaufzeit der WD-Time kleiner als die Zykluszeit der Komponente ist. Denn selbst wenn bis zum nächsten Zyklus ein neues Telegramm empfangen worden wäre, muss sicher auf die abgelaufene WD-Time reagiert werden. Dies würde sowieso im nächsten Zyklus passieren, selbst wenn in der Zwischenzeit ein Telegramm zurückkommen würde, da die Auswertung der Restlaufzeit am Anfang des F-Programms stattfinden muss, bevor die Überprüfung auf ein neues Telegramm stattfindet.

Auch wird die eingangs genannte Aufgabe durch ein Ausgabegerät gelöst, welches ausgestaltet ist ein Telegramm zur Ausgabe eines Prozesswertes zu empfangen, weiterhin ausgestaltet mit einer Diagnoseeinheit ausgestaltet zum Ausführen des Verfahrens nach Anspruch 1 bis 5, und ausgestaltet das, dass bei Vorliegen des Überwachungssignals vom Prozesswert auf ein Ersatzwerte umgeschaltet wird.

Insbesondere in der Roboter-Technik ist das Ausgabegerät ausgestaltet als integrativer Bestandteil eines Aktors in der Automatisierungstechnik, dieser Aktor ist dann beispielsweise ein Antriebsmotor.

Die Zeichnung zeigt Ausführungsbeispiele der Erfindung und weitere Erläuterungen. Dabei zeigt

FIG 1 eine Kommunikation zwischen einem ersten Teilnehmer und einem zweiten Teilnehmer nach dem Stand der Technik,

FIG 2 eine Kommunikation zwischen dem ersten Teilnehmer und dem zweiten Teilnehmer mit einer erfindungsgemäßen Diagnoseeinheit,

FIG 3 ein Diagramm zur Veranschaulichung einer Verkürzung einer Safety Function Responce Time (SFRT),

FIG 4 Auswirkung der Reduzierung der SFRT,

FIG 5 eine Automatisierungssteuerung und

FIG 6 einen Motor mit einem integrierten Ausgabegerät.

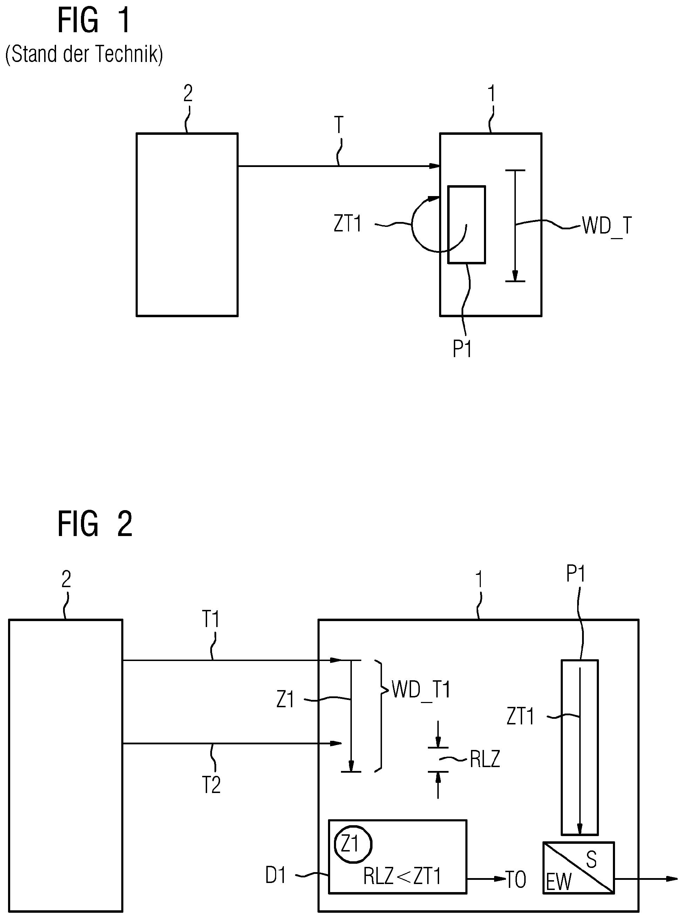

Gemäß FIG 1 ist eine Kommunikation zwischen einem ersten Teilnehmer 1 und einem zweiten Teilnehmer 2 dargestellt. Der zweite Teilnehmer 2 sendet ein Telegramm T zum ersten Teilnehmer 1. Mit Empfang des Telegramms T wird dem ersten Teilnehmer 1 eine Überwachungszeit gestartet, es läuft eine Watchdog Time WD_T ab. Sollte nicht innerhalb des Zeitablaufes der Watchdog Time WD_T ein weiteres Telegramm beim ersten Teilnehmer 1 eintreffen, wird mit einer die Sicherheit beeinflussenden Funktion reagiert. Das bedeutet, dass erst wenn im ersten Teilnehmer 1 die Watchdog Time WD_T abgelaufen ist, wird auf ein die Sicherheit beeinflussendes Ereignis reagiert. Das erste Bearbeitungsprogramm P1 wird mit einer ersten Zykluszeit ZT1 abgearbeitet.

Mit der FIG 2 wird die Kommunikation des aus FIG 1 bekannten ersten Teilnehmer 1 und des zweiten Teilnehmers 2 mit dem erfindungsgemäßen Verfahren beschrieben. Der erste Teilnehmer 1 ist nun derart ausgestaltet, dass mit ihm ein Verfahren zum Überwachen einer Kommunikationsverbindung zwischen dem ersten Teilnehmer 1 und dem zweiten Teilnehmer 2 durchgeführt werden kann. Im ersten Teilnehmer 1 wird ein erstes Bearbeitungsprogramm P1 mit einer ersten Zykluszeit ZT1 zyklisch abgearbeitet. Zur Überwachung der Kommunikationsverbindung wird im ersten Teilnehmer 1 eine erste Diagnoseeinheit D1 mit einem ersten Zeitzähler Z1 derart betrieben, dass ein Eintreffen eines ersten Telegramms T1 von dem zweiten Teilnehmer 2 den ersten Zeitzähler Z1 startet. Innerhalb einer vorgebbaren ersten Überwachungszeit WD_T1 wird mit Hilfe des ersten Zeitzählers Z1 ein Eintreffen eines zweiten Telegramms T2 von dem zweiten Teilnehmer 2 überwacht.

In der ersten Diagnoseeinheit D1 wird eine Restlaufzeit RLZ aus der Differenz der ersten Überwachungszeit WD_T1 und des ersten Zeitzählers Z1 gebildet. Es wird nun fortwährend geprüft, ob die Restlaufzeit RLZ kleiner oder gleich der ersten Zykluszeit ZT1 ist. Wenn der Fall eintritt, dass die Restlaufzeit RLZ kleiner oder gleich der ersten Zykluszeit ist, wird ein Überwachungssignal TO generiert. Der erste Teilnehmer 1 schaltet dann von Prozesswerten S auf Ersatzwerte EW um.

Der wesentliche Vorteil des Ausführens des genannten Verfahrens ist, dass bereits reagiert werden kann, wenn die Restlaufzeit RLZ des Zeitzählers Z1 für eine Überwachungszeit, insbesondere für eine gerätespezifische Überwachungszeit, kleiner ist als die Zykluszeit bzw. kleiner ist als die gerätespezifische Zykluszeit eines Gerätes.

Hier im Beispiel der FIG 2 wird der Vergleich zwischen der Restlaufzeit RLZ und der ersten Zykluszeit ZT1 für die Abarbeitung des ersten Bearbeitungsprogramms P1 genutzt.

Eine Umschaltung von Prozesswerten auf Ersatzwerten kann nun bereits in dem Zyklus ausgeführt werden, in welchem die Prüfung ergeben hat, dass die Restlaufzeit kleiner oder gleich der ersten Zykluszeit ist. Im Sinne einer schnellen Reaktion für eine sicherheitstechnische Auswertung spart man sich nun eine ganze Zykluszeit ein.

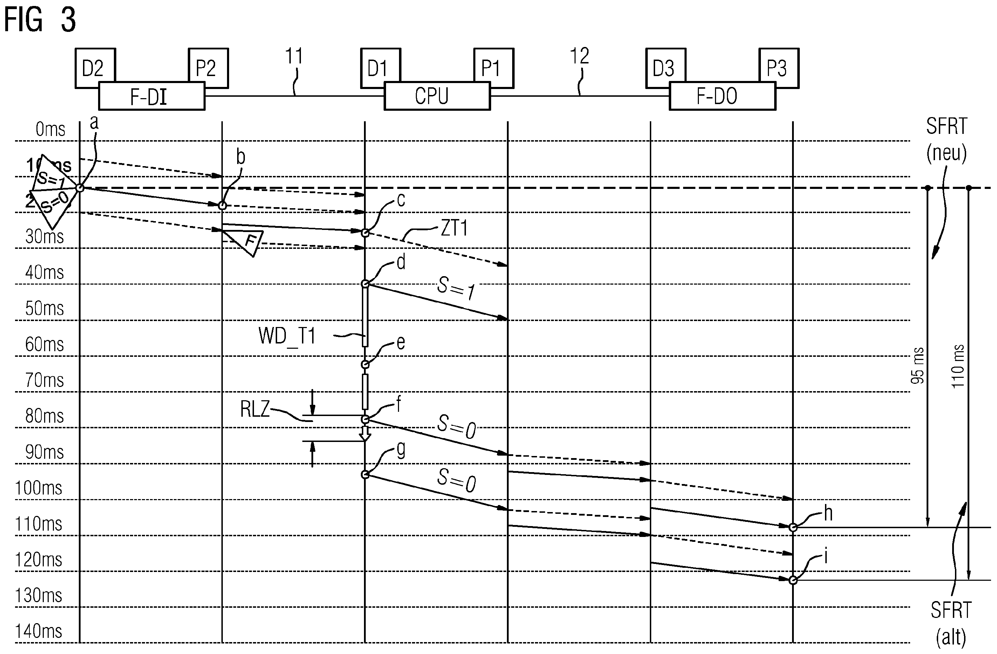

Die FIG 3 zeigt ein Ablaufdiagramm für die Kommunikation von einem Eingabegerät F-DI zu einer Automatisierungssteuerung CPU und wiederum eine Kommunikation für Befehle von der Automatisierungssteuerung CPU zu einem Ausgabegerät F-DO. Das Eingabegerät F-DI ist über einen ersten Bus 11 mit der Automatisierungssteuerung CPU verbunden und das Ausgabegerät F-DO ist über einen zweiten Bus 12 mit der Automatisierungssteuerung CPU verbunden. Das Eingabegerät F-DI nimmt beispielsweise einem Prozesswert S, der entweder S = 1 oder S 0 = sein kann, entgegen. Der Prozesswert S könnte beispielsweise eine sichere Funktion für eine Auslösevorrichtung LG sein. In dem Eingabegerät F-DI wird eine zweite Diagnoseeinheit D2 betrieben und es läuft ein zweites Bearbeitungsprogramm P2 ab. In der Automatisierungssteuerung CPU wird eine erste Diagnoseeinheit D1 betrieben und es läuft ein erstes Bearbeitungsprogramm P1 ab. In dem Ausgabegerät F-DO wird eine dritte Diagnoseeinheit D3 betrieben und es läuft ein drittes Bearbeitungsprogramm P3 ab. In den genannten Diagnoseeinheiten D1,D2,D3 ist das vorgenannte Verfahren zur Überwachung der Kommunikationsverbindung implementiert. Das Eingabegeräte F-DI sendet Telegramme über den ersten Bus 11 zur Automatisierungssteuerung CPU. Die Telegramme enthalten den Prozesswert S. Von einem Startpunkt a aus wird ein Telegramm mit dem Prozesswert S = 1 über den ersten Bus 11 zur Automatisierungssteuerung CPU gesendet. Das Eingabegerät F-DI hat eine gerätespezifische Zykluszeit und dementsprechend verlässt an einen Punkt b das Telegramm mit dem Prozesswert S = 1 das Eingabegerät F-DI. Der erste Bus 11 hat wiederum eine Busverzögerungszeit oder auch eine Telegrammzykluszeit, dementsprechend braucht das Telegramm von dem Punkt b zu den Punkt c eine gewisse Buslaufzeit. Die Automatisierungssteuerung CPU hat ebenfalls eine gerätespezifische Zykluszeit und so wird sie den empfangenen Prozesswert S = 1 erst nach einer Zykluszeit am Punkt d über den zweiten Bus 12 zu dem Ausgabegerät F-DO weiterleiten können.

In der Automatisierungssteuerung CPU startet das letzte erkannte Signal S = 1 die erste Überwachungszeit WD_T1.

Jetzt tritt aber der Fall auf, dass der erste Bus 11 einen Ausfall hat bzw. ein Fehler vorliegt, oder das Eingabegerät F-DI ausgefallen ist und es werden keine neue Daten bzw. Telegramme dem Bus übergeben. Dies wird verdeutlicht durch das kleine Dreieck mit dem Prozesswert S = 0. Unterhalb des Punktes b ist eine Fehlerkennung F angezeigt. Es liegt somit ein Signalwechsel des Prozesswertes S von S = 1 auf S = 0 vor, der nicht mehr bis zur Automatisierungssteuerung CPU durchkommt. An Punkt d wurde die Watchdog-Zeit bzw. die erste Überwachungszeit WD_T1 gestartet. An Punkt e ist die Restlaufzeit RLZ der Überwachungszeit WD_T1 gerade noch nicht abgelaufen, jedoch ist sie kleiner als der Watchdog bzw. als die erste Zykluszeit ZT1 der Automatisierungssteuerung CPU. Damit wird bereits jetzt reagiert, da die Überwachungszeit WD_T1 im nächsten Zyklus definitiv ablaufen würde. Daraus folgt, das Signal S = 1 muss auf einen sicheren Ersatzwert EW = 0 gesetzt werden. Nun sendet die Automatisierungssteuerung CPU noch vor Ablauf der eigentlichen Überwachungszeit ein Telegramm zum Ausgabegerät F-DO mit dem sicheren Ersatzwert EW = 0 bzw. S = 0. Dieses Signal muss wiederum über den zweiten Bus 12 mit einer gewissen Verzögerungszeit übertragen werden. Angekommen beim Ausgabegerät F-DO vergeht auch hier eine gewisse Verzögerungszeit bis das Signal bzw. der sichere Ersatzwert EW = 0 ausgegeben werden kann. Diese sichere Ausgabe ist am Punkt h erfolgt. Ohne das erfindungsgemäße Verfahren in dem geprüft wird, ob die Restlaufzeit RLZ kleiner oder gleich der ersten Zykluszeit ZT1 ist, würde ein sicherer Ersatzwert erst am Punkt g von der Automatisierungssteuerung CPU bereitgestellt werden.

Gemäß der alten Auswertung der Überwachungszeit wird erst nach Ablauf der Überwachungszeit WD_T1 reagiert und somit in einen Worstcase erst einen Zyklus später. Die Automatisierungssteuerung CPU würde erst am Punkt g reagieren, dass der sichere Ersatzwert EW = 0 bzw. S = 0 muss losgeschickt werden muss, dieser braucht auch wieder seine Laufzeit über den zweiten Bus und wird schließlich im Ausgabegerät F-DO verarbeitet und kann am Punkt i verzögert sicher ausgegeben werden. Somit ergeben sich eine alte maximale Reaktionszeit für einen Fehlerfall SFRTalt und eine neue maximale Reaktionszeit für einen Fehlerfall SFRTneu. Klar zu erkennen ist, dass die neue maximale Reaktionszeit für einen Fehlerfall SFRTneu mit 95 ms kleiner ist als die alte maximale Reaktionszeit für einen Fehlerfall SFRTalt mit 110 ms.

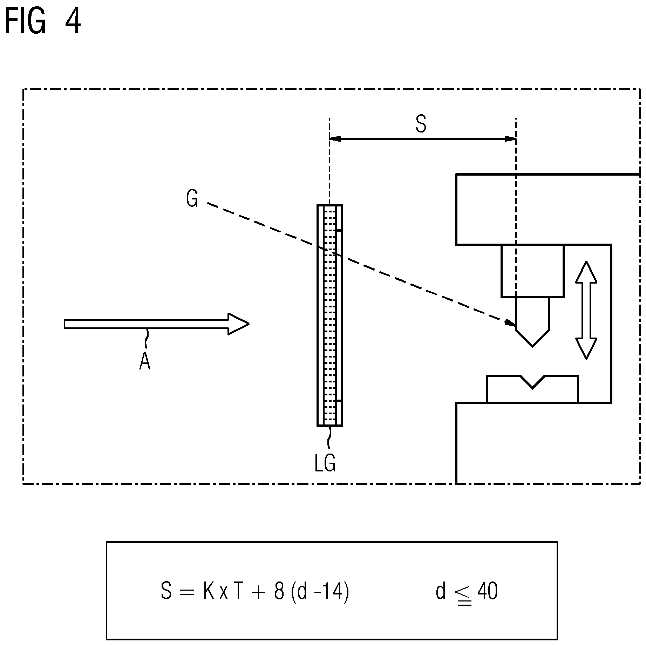

Mit der FIG 4 wird die Auswirkung einer Reduzierung der maximalen Reaktionszeit für einen Fehlerfall SFRT an einem Anlagenbeispiel erklärt. Zu einer Presse muss beispielsweise ein Sicherheitsabstand S eingehalten werden. Der Sicherheitsabstand S ist gemessen zwischen einen Gefahrenbereich G und dem Aufstellungsort einer Auslösevorrichtung LG, hier im Beispiel ein Lichtgitter. Es könnte nun beispielsweise eine menschliche Hand aus einer Annäherungsrichtung A in die Presse greifen wollen, dabei wird über die Auslösevorrichtung LG ein Signal ausgelöst. Dieses Signal muss wie in FIG 3 beschrieben, durch die einzelnen Komponenten und die Busse zu einem Ausgabegerät mit Verzögerung übertragen werden. Bei der Kommunikationsberechnung für diesen geschilderten Anlagenbetrieb gemäß FIG 4 ist in dem Beispiel die SFRT von 369 ms auf 269 ms zurückgegangen. Aufgrund dieser Reduzierung der SFRT um 100 ms, kann der Sicherheitsabstand S der Auslösevorrichtung LG zum Gefahrenbereich G um 200 mm verkleinert werden.

Den Sicherheitsabstand S kann man mit der dargestellten Formel S = K · 8 + P + 8 ·(D-14) berechnen. Als Annäherungsgeschwindigkeit K wird von 2000 m/s ausgegangen. Das entspräche einer Eindringgeschwindigkeit einer menschlichen Hand. T wird als die maximal erforderliche Anhaltezeit der Maschine plus Ansprechzeit der Auslösevorrichtung bzw. dem Detektionsvermögen D eines Lichtvorhangs zusammengestellt.

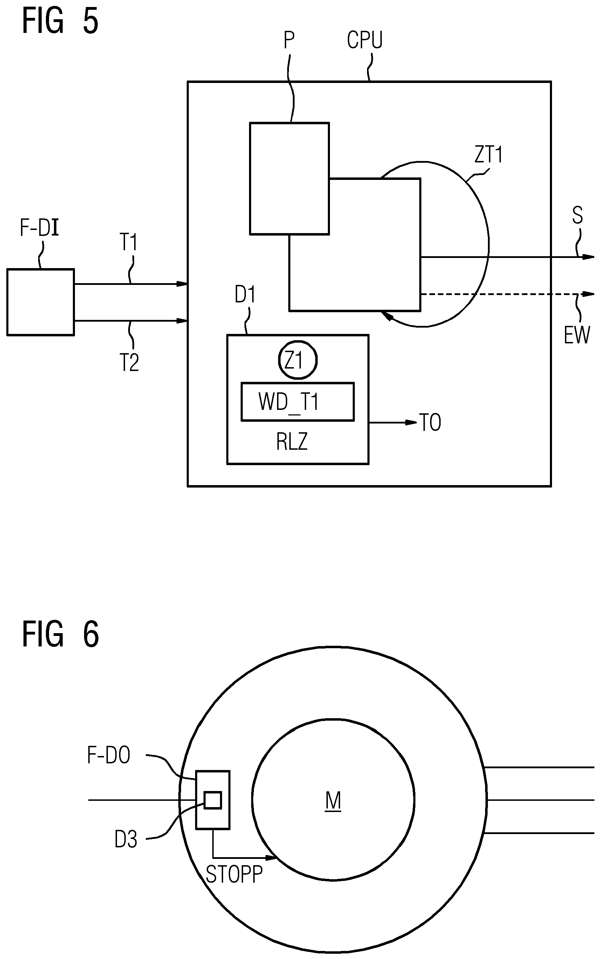

Mit der FIG 5 ist die in FIG 4 beschriebene Automatisierungssteuerung CPU noch einmal schematisch aufgezeigt. Die Automatisierungssteuerung CPU umfasst eine Diagnoseeinheit D1 zum Überwachen einer Kommunikationsverbindung mit einem Eingabegerät FDI, des Weiteren umfasst die Automatisierungssteuerung CPU einen Prozessor P, welcher ausgestaltet ist zum zyklischen Abarbeiten des Bearbeitungsprogramms P1. Das Bearbeitungsprogramm P1 wird in der Automatisierungssteuerung CPU mit einer ersten Zykluszeit ZT1 abgearbeitet. Die Diagnoseeinheit D1 ist ausgestaltet, mit einem ersten Zeitzähler Z1, welcher bei Eintreffen eines ersten Telegramms T1 gestartet wird. Die Diagnoseeinheit D1 ist weiterhin ausgestaltet, innerhalb einer vorgebbaren ersten Überwachungszeit WD_T1 mit Hilfe des ersten Zeitzählers Z1 ein Eintreffen eines zweiten Telegramms T2 von dem Eingabegerät F-DI zu überwachen. Um die maximale Reaktionszeit für einen Fehlerfall SFRT nun zu verringern, ist die Diagnoseeinheit D1 ausgestaltet, eine Restlaufzeit RLZ aus der Differenz der ersten Überwachungszeit WD_T1 und des ersten Zeitzählers Z1 zu bilden und weiterhin ausgestaltet zu prüfen, ob die Restlaufzeit RLZ kleiner oder gleich der ersten Zykluszeit ZT1 ist, und wenn dass der Fall ist, wird ein Überwachungssignal TO generiert. Nun kann vorzeitig von Prozesswerten S auf sichere Ersatzwerte EW umgeschaltet werden.

Gemäß FIG 6 ist ein Ausgabegerät F-DO als integrativer Bestandteil eines Servomotors M für einen Roboter dargestellt. Ist das Ausgabegerät F-DO mit seiner dritten Diagnoseeinheit D3 direkt in den Motor eines Roboters implementiert bzw. integriert, so kann noch schneller auf ein Stopp-Signal reagiert werden.

**Patentansprüche**

1. Verfahren zum Überwachen einer Kommunikationsverbindung zwischen einem ersten Teilnehmer (1) und einem zweiten Teilnehmer (2), wobei im ersten Teilnehmer (1) ein erstes Bearbeitungsprogramm (P1) mit einer ersten Zykluszeit (ZT1) zyklisch abgearbeitet wird, und wobei zur Überwachung der Kommunikationsverbindung im ersten Teilnehmer (1) eine erste Diagnoseeinheit (D1) mit einem ersten Zeitzähler (Z1) derart betrieben wird, dass ein Eintreffen eines ersten Telegramms (T1) von dem zweiten Teilnehmer (2) den ersten Zeitzähler (Z1) startet, wobei innerhalb einer vorgebbaren ersten Überwachungszeit (WD_T1) mit Hilfe des ersten Zeitzählers (Z1) ein Eintreffen eines zweiten Telegramms (T2) von dem zweiten Teilnehmer (2) überwacht wird,
**dadurch gekennzeichnet, dass** in der ersten Diagnoseeinheit (D1) eine Restlaufzeit (RLZ) aus der Differenz der ersten Überwachungszeit (WD_T1) und des ersten Zeitzählers (Z1) gebildet wird und geprüft wird, ob die Restlaufzeit (RLZ) kleiner oder gleich der ersten Zykluszeit (ZT1) ist, und wenn das der Fall ist, wird ein Überwachungssignal (TO) generiert.

2. Verfahren nach Anspruch 1, wobei die Kommunikationsverbindung zwischen dem ersten Teilnehmer (1) und dem zweiten Teilnehmer (2) in einem sicherheitsrelevanten System betrieben wird, und das erste Bearbeitungsprogramm (P1) im ersten Teilnehmer (1) bei Vorliegen des Überwachungssignals (TO) von empfangenen Prozesswerten (S) auf Ersatzwerte (EW) umgeschaltet, wobei die Umschaltung bereits in dem Zyklus ausgeführt wird, in welchem die Prüfung ergeben hat, das die Restlaufzeit (RLZ) kleiner oder gleich der ersten Zykluszeit (ZT1) ist.

3. Verfahren nach Anspruch 1 oder 2, zur Anwendung bei einem Kommunikations-Betrieb von dem zweiten Teilnehmer (2) als ein Eingabegerät (F-DI) über den ersten Teilnehmer (1) als eine Automatisierungs-Steuerung (CPU) zu einem dritten Teilnehmer (3) als ein Ausgabegerät (F-DO), wodurch eine maximale Reaktionszeit für einen Fehlerfall (SFRT) in der Kommunikation minimiert wird und sicher auf den Fehlerfall reagiert wird.

4. Verfahren nach einem der Ansprüche 1 bis 3, welches genutzt wird in einem Standard für ein Kommunikationsprotokoll zur Übertragung sicherheitsrelevanter Daten in Automatisierungsanwendungen mit funktionaler Sicherheit.

5. Verfahren nach einem der Ansprüche 1 bis 4, welches genutzt wird um bei dem Betrieb einer gefahrbringenden Maschine einen Abstand eines Bedieners (B) zu einer Auslösevorrichtung (LG) zu verringern.

6. Automatisierungs-Steuerung (CPU) umfassend eine Diagnoseeinheit (D1) zum Überwachen einer Kommunikationsverbindung mit einem Eingabegerät (F-DI),

   einen Prozessor (P) ausgestaltet zum zyklischen Abarbeiten eines Bearbeitungsprogramms (P1) mit einer ersten Zykluszeit (ZT1), die Diagnoseeinheit (D1) ist ausgestaltet mit einem ersten Zeitzähler (Z1), welcher bei Eintreffen eines ersten Telegramms (T1) gestartet wird, weiterhin ausgestaltet innerhalb einer vorgebbaren ersten Überwachungszeit (WD_T1) mit Hilfe des ersten Zeitzähler (Z1) ein Eintreffen eines zweiten Telegramms (T2) von dem Eingabegerät (F-DI) zu überwachen,
   **dadurch gekennzeichnet, dass** die Diagnoseeinheit (D1) ausgestaltet ist eine Restlaufzeit (RLZ) aus der Differenz der ersten Überwachungszeit (WD_T1) und des ersten Zeitzählers (Z1) zu bilden und weiterhin ausgestaltet zu prüfen, ob die Restlaufzeit (RLZ) kleiner oder gleich der ersten Zykluszeit (ZT1) ist, und wenn das der Fall ist, wird ein Überwachungssignal (TO) generiert.

7. Automatisierungs-Steuerung (CPU) nach Anspruch 6, weiterhin ausgestaltet als eine auf funktionale Sicherheit ausgelegte Steuerung, und ausgestaltet das, dass Bearbeitungsprogramm (P1) bei Vorliegen des Überwachungssignals (TO) von empfangenen Prozesswerten (S) auf Ersatzwerte (EW) umschaltet, wobei die Umschaltung bereits in dem Zyklus ausgeführt wird, in welchem die Prüfung ergeben hat, dass die Restlaufzeit (RLZ) kleiner oder gleich der ersten Zykluszeit (ZT1) ist.

8. Automatisierungs-Steuerung (CPU) nach Anspruch 6 oder 7, ausgestaltet mit einem Busanschluss (10) zum Anschluss eines Eingabegerätes (F-DI) und eines Ausgabegerätes (F-DO), wobei die Diagnoseeinheit (D1) und das erste Bearbeitungsprogramm (P1) ausgestaltet sind durch das Bereitstellen der Ersatzwerte (EW) eine maximale Reaktionszeit für einen Fehlerfall (SFRT) in der Kommunikation zu minimieren und sicher auf den Fehlerfall zu reagieren.

9. Automatisierungs-Steuerung (CPU) nach einem der Ansprüche 6 bis 8, ausgestaltet mit einem Kommunikationstreiber für ein standardisiertes Kommunikationsprotokoll zur Übertragung sicherheitsrelevanter Daten in Automatisierungsanwendungen mit funktionaler Sicherheit.

10. Ausgabegerät (F-DO) ausgestaltet ein Telegramm zur Ausgabe eines Prozesswertes (S) zu empfangen, weiterhin ausgestaltet mit einer Diagnoseeinheit (D3) zum Ausführen des Verfahrens Anspruch 1 bis 5, und ausgestaltet das, dass bei Vorliegen des Überwachungssignals (TO) vom Prozesswert (S) auf ein Ersatzwerte (EW) umgeschaltet wird.

11. Ausgabegerät (F-DO) nach Anspruch 10, ausgestaltet als integrativer Bestandteil eines Aktors in der Automatisierungstechnik.

## Claims

1. Method for monitoring a communication connection between a first subscriber (1) and a second subscriber (2), wherein a first processing program (P1) with a first cycle time (ZT1) is executed cyclically in the first subscriber (1), and wherein for monitoring the communication connection a first diagnostic unit (D1) with a first time counter (Z1) is operated in the first subscriber (1), such that an arrival of a first telegram (T1) from the second subscriber (2) starts the first time counter (Z1), wherein an arrival of a second telegram (T2) from the second subscriber (2) is monitored within a predefinable first monitoring time (WD_T1) with the help of the first time counter (Z1), **characterised in that** in the first diagnostic unit (D1) a residual period (RLZ) is formed from the difference between the first monitoring time (WD_T1) and the first time counter (Z1) and a check is made to see whether the residual period (RLZ) is less than or equal to the first cycle time (ZT1), and if this is the case a monitoring signal (TO) is generated.

2. Method according to claim 1, wherein the communication connection between the first subscriber (1) and the second subscriber (2) is operated in a safety-related system, and in the presence of the monitoring signal (TO) the first processing program (P1) in the first subscriber (1) is switched from received process values (S) to substitute values (EW), wherein the switch is executed in the cycle in which the check showed that the residual period (RLZ) is less than or equal to the first cycle time (ZT1).

3. Method according to claim 1 or 2, for use in a communication operation from the second subscriber (2) as an input device (F-DI) to a third subscriber (3) as an output device (F-DO) via the first subscriber (1) as an automation controller (CPU), as a result of which a maximum response time for an error (SFRT) in the communication is minimised and a safe response is given to the error.

4. Method according to one of claims 1 to 3, which is used in a standard for a communication protocol for the transmission of safety-related data in automation applications with functional safety.

5. Method according to one of claims 1 to 4, which is used in order to reduce a distance of an operator (B) from a triggering device (LG) during operation of a dangerous machine.

6. Automation controller (CPU) comprising

a diagnostic unit (D1) for monitoring a communication connection to an input device (F-DI),
a processor (P) designed for the cyclical execution of a processing program (P1) with a first cycle time (ZT1), the diagnostic unit (D1) being designed with a first time counter (Z1) which is started on arrival of a first telegram (T1), and is further designed to monitor an arrival of a second telegram (T2) from the input device (F-DI) within a predefinable first monitoring time (WD_T1) with the help of the first time counter (Z1), **characterised in that** the diagnostic unit (D1) is designed to form a residual period (RLZ) from the difference between the first monitoring time (WD_T1) and the first time counter (Z1) and is further designed to check whether the residual period (RLZ) is less than or equal to the first cycle time (ZT1), and if this is the case a monitoring signal (TO) is generated.

7. Automation controller (CPU) according to claim 6, further designed as a controller designed for functional safety, and in the presence of the monitoring signal (TO) the processing program (P1) being switched from received process values (S) to substitute values (EW), wherein the switch is already executed in the cycle in which the check showed that the residual period (RLZ) is less than or equal to the first cycle time (ZT1).

8. Automation controller (CPU) according to claim 6 or 7, designed with a bus connection (10) for the connection of an input device (F-DI) and an output device (F-DO), wherein the diagnostic unit (D1) and the first processing program (P1) are designed to minimise a maximum response time for an error (SFRT) in the communication by the provision of the substitute values (EW) and to give a safe response to the error.

9. Automation controller (CPU) according to one of claims 6 to 8, designed with a communication driver for a standardised communication protocol for the transmission of safety-related data in automation applications with functional safety.

10. Output device (F-DO) designed to receive a telegram for the output of a process value (S), further designed with a diagnostic unit (D3) for the execution of the method according to claims 1 to 5, and designed in that in the presence of the monitoring signal (TO) a switch is made from the process value (S) to a substitute value (EW).

11. Output device (F-DO) according to claim 10, designed as an integrative part of an actuator in automation technology.

**Revendications**

1. Procédé de surveillance d'une liaison de communication entre un premier participant (1) et un deuxième participant (2), dans lequel, dans le premier participant (1), on élabore cycliquement avec un premier temps (ZT1) de cycle un premier programme (P1) de traitement, et dans lequel pour la surveillance de la liaison de communication, on fait fonctionner dans le premier participant (1) une unité (D1) de diagnostic ayant un premier compteur (Z1) de temps,

de manière à ce qu'une arrivée d'un premier télégramme (T1) du deuxième participant (2) fasse démarrer le premier compteur (Z1) de temps, dans lequel, dans un premier temps (WD_T1) de surveillance pouvant être donné à l'avance, on surveille, à l'aide du premier compteur (Z1) de temps, l'arrivée d'un deuxième télégramme (T2) du deuxième participant (2),
**caractérisé en ce que**, dans la première unité (D1) de diagnostic, on forme un temps (RLZ) restant de propagation à partir de la différence entre le premier temps (WD_T1) de surveillance et le premier compteur (Z1) de temps et on contrôle, si le temps (RLZ) restant de propagation est inférieur ou égal au premier temps (ZT1) de cycle et, si c'est le cas, on crée un signal (TO) de surveillance.

2. Procédé suivant la revendication 1, dans lequel on fait fonctionner la liaison de communication entre le premier participant (1) et le deuxième participant (2) dans un système pertinent du point de vue de la sécurité et on commute le premier programme (P1) de traitement dans le premier participant (1), en présence du signal (TO) de surveillance, de valeurs (S) de processus reçues à des valeurs (EW) de remplacement, dans lequel on réalise la commutation déjà dans le cycle, dans lequel le contrôle a donné que le temps (RLZ) restant de propagation est inférieur ou égal au premier temps (ZT1) de cycle.

3. Procédé suivant la revendication 1 ou 2, pour l'application dans un fonctionnement de communication, du deuxième participant (2) sous la forme d'un appareil (F-DI) d'entrée, par l'intermédiaire du premier participant (1) sous la forme d'une commande d'automatisation (CPU), à un troisième participant (3) sous la forme d'un appareil (F-DO) de sortie, grâce à quoi on minimise un temps maximum de réaction pour un cas (SFRT) de défaut dans la communication et on réagit d'une manière sûre au cas de défaut.

4. Procédé suivant l'une des revendications 1 à 3, que l'on utilise dans une norme pour un protocole de communication pour la transmission de données pertinentes du point de vue de la sécurité dans des applications d'automatisation à sécurité fonctionnelle.

5. Procédé suivant l'une des revendications 1 à 4, que l'on utilise pour diminuer, lors du fonctionnement d'une machine mettant en danger, une distance d'un opérateur (B) à un dispositif (LG) de déclenchement.

6. Commande (CPU) d'automatisation comprenant

une unité (D1) de diagnostic pour la surveillance d'une liaison de communication avec un appareil (F-DI) d'entrée,

un processeur (P) configuré pour l'élaboration cyclique d'un programme (P1) de traitement ayant un premier temps (ZT1) de cycle, l'unité (D1) de diagnostic est conformée en ayant un premier compteur (Z1) de temps, que l'on fait démarrer à l'arrivée d'un premier télégramme (T1), étant conformée en outre pour, dans un premier temps (WD_T1) de surveillance pouvant être donné à l'avance, surveiller par l'appareil (F-DI) d'entrée, à l'aide du premier compteur (Z1) de temps, l'arrivée d'un deuxième télégramme (T2),
**caractérisée en ce que**
l'unité (D1) de diagnostic est conformée pour former un temps (RLZ) restant de propagation à partir de la différence entre le premier temps (WD_T1) de surveillance et le premier compteur (Z1) de temps et conformée en outre pour contrôler, si le temps (RLZ) restant de propagation est inférieur ou égal au premier temps (ZT1) de cycle, et, si c'est le cas, on crée un signal (TO) de surveillance.

7. Commande (CPU) d'automatisation suivant la revendication 6, conformée en outre sous la forme d'une commande conçue en vue d'une sécurité fonctionnelle et conformée, de manière à commuter le programme (P1) de traitement, en présence du signal (TO) de surveillance, de valeurs (S) de processus reçues à des valeurs (EW) de remplacement, dans lequel on réalise la commutation déjà dans le cycle, dans lequel le contrôle a donné que le temps (RLZ) restant de propagation est inférieur ou égal au premier temps (ZT1) de cycle.

8. Commande (CPU) d'automatisation suivant la revendication 6 ou 7, conformée en ayant une connexion (10) de bus pour la connexion de l'appareil (F-DI) d'entrée et d'un appareil (F-DO) de sortie, dans laquelle l'unité (D1) de diagnostic et le premier programme (P1) de traitement sont conformés pour minimiser, par la mise à disposition des valeurs (EW) de remplacement, un temps maximum de réaction pour un cas (SFRT) de défaut dans la communication et réagir de manière sûre au cas de défaut.

9. Commande (CPU) d'automatisation suivant l'une des revendications 6 à 8, conformée en ayant un circuit d'attaque de communication pour un protocole de communication normalisé en vue de la transmission de données pertinentes du point de vue de la sécurité dans des applications d'automatisation à sécurité fonctionnelle.

10. Appareil (F-DO) de sortie conformé pour recevoir un télégramme pour la sortie d'une valeur (S) de processus, conformé en outre en ayant une unité (D3) de diagnostic pour la réalisation du procédé suivant l'une des revendications 1 à 5, et conformé de manière à ce que, en présence du signal (TO) de surveillance, on commute de la valeur (S) de processus à une valeur (EW) de remplacement.

11. Appareil (F-DO) de sortie suivant la revendication 10, conformé en constituant intégré d'un actionneur dans la technique d'automatisation.

## FIG 1
(Stand der Technik)

## FIG 2

FIG 3

FIG 4

$$S = K \times T + 8 \, (d - 14) \qquad d \leq 40$$

# FIG 5

# FIG 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1484655 A1

- DE 102017119578 A1